# EUROPEAN PATENT APPLICATION

(11) **EP 1 443 767 A2**
(43) Date of publication of application: **04.08.2004**
(21) Application number: 04001228.8
(22) Date of filing: 21.01.2004
(51) Int. Cl.: H04N 7/173

(54) **Media exchange network with media guide interface**

(30) Priority: 30.01.2003 US 443894 P; 18.02.2003 US 448705 P; 25.03.2003 US 457179 P
(71) Applicant: Broadcom Corporation, Irvine, California 92618-7013 (US)
(72) Inventor: Karaoguz, Jeyhan, California 92606 Irvine (US); Bennett, James D., 92651 Laguna Beach, CA (US)
(74) Representative: Jehle, Volker Armin, Dipl.-Ing.

(57) **Abstract**

Aspects of the invention may comprise determining personal media and/or broadcast media that is to be presented in a communication channel. A schedule for presenting the personal media and/or broadcast media in the communication channel may be determined and the schedule comprising representations of the personal media and/or broadcast media presented in a media guide. The media guide may be presented in a graphical user interface that may comprise aural and/or visual representations of the personal media and/or broadcast media comprising audio, text, video and/or graphics. The graphical user interface may be controlled by a keyboard, a mouse, a remote control and/or a microphone, for example. The schedule may be adapted to correlate a particular one of the personal media and broadcast media to at least one of a time, a day and a year for presenting the personal media and/or broadcast media in the communication channel.

## Description

### CROSS-REFERENCE TO RELATED APPLICATIONS/INCORPORATION BY REFERENCE

This application makes reference to, claims priority to, and claims the benefit of:
United States Provisional Application Serial No. 60/432,472 (Attorney Docket No. 14185US01 01001 P-BP-2800) filed December 11, 2002;
United States Provisional Application Serial No. 60/443,894 (Attorney Docket No. 14274US01 01002P-BP-2801) filed January 30, 2003;
United States Provisional Application Serial No. 60/457,179 (Attorney Docket No. 14825US01 01015P-BP-2831) filed March 25, 2003; and
United States Provisional Application Serial No. 60/448,705 (Attorney Docket No. 14330US01 010017P-BP-2819) filed February 18, 2003.

This application also makes reference to:
United States Application Serial No. (Attorney Docket No. 14185US02 01001 P-BP-2800) filed September 8, 2003; and
United States Application Serial No. (Attorney Docket No. 14274US02 01002P-BP-2801) filed September 11, 2003.

All of the above stated applications are incorporated herein by reference in their entirety.

### FIELD OF THE INVENTION

Certain embodiments of the invention relate to media interfaces. More specifically, certain embodiments of the invention relate to a method and system for providing a media guide interface comprising both commercial broadcast.

### BACKGROUND OF THE INVENTION

Today, a cable television (TV) service provider or satellite service provider typically provides a television channel guide showing a schedule of broadcast channels made available by the service provider. A user of the service may select a particular broadcast channel to view, from various broadcast channels, utilizing, for example, a remote control.

A user of a media capture device may capture personal media and playback the captured media at a later time on a television or other display. For example, a user of a camcorder may record a personal event, such as a child's sporting event, and playback the recorded event at a later time on a television using a VCR. The VCR has its own menu-driven user interface that is independent of the television channel guide. A separate remote control that is unique to the VCR may be required as well.

Various types of digital media such as digital images, digital video, and digital audio may be captured using a personal media device such as a digital camera. The captured digital media may be transferred to a personal computer (PC) and stored on the personal computer using a typical PC-based user interface of folders and files and menus displayed on a monitor of the personal computer. The captured media may be played back on the monitor and/or speakers of the personal computer using the same displayed PC-based user interface.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

Certain embodiments of the invention may be found in a method and system for customizing a channel interface. Aspects of the method for customizing a channel interface may comprise the step of determining at least one of personal media and broadcast media that is to be presented in a communication channel. A schedule for presenting the personal media and/or broadcast media in the communication channel may be determined, and the schedule comprising representations of the personal media and/or broadcast media may be presented in a media guide. The media guide comprising the personal media and/or broadcast media may be presented in a graphical user interface. The graphical user interface may contain aural and/or visual representations of the personal media and/or broadcast media comprising audio, text, video and/or graphics. The graphical user interface may be controlled by a keyboard, a mouse, a remote control and/or a microphone, for example.

The schedule may be adapted to correlate a particular one of the personal media and broadcast media to at least one of a time, a day and a year for presenting the personal media and/or broadcast media in the communication channel. The method may further comprise displaying access and control functions for controlling or manipulating the personal media and/or broadcast media from within the media guide. Accordingly, the personal media and/or broadcast media may be selected from a list of sources presented in the media guide. The personal media and/or broadcast media may be rescheduled to be presented in the communication channel, utilizing, for example, the access and control functions. In this regard, a time, a day and/or a year when the personal media and/or broadcast media is to be presented in the communication channel may be updated within the media guide. A source of the personal and/or broadcast media may also be displayed within the media guide.

Another embodiment of the invention may provide a machine-readable storage, having stored thereon, a computer program having at least one code section for providing customizing a channel interface. The at least one code section may be executable by a machine, thereby causing the machine to perform the steps as described above for customizing a channel interface.

Aspects of the system for customizing a channel interface may comprise at least one processor that receives an indication of personal media and/or broadcast media that is to be presented in a communication channel. The processor may be a media processing system processor, a media management system processor, a computer processor, a media exchange software processor and a media peripheral processor. The processor may receive a schedule for presenting the personal media and/or broadcast media in the communication channel. The processor may cause the schedule comprising representations of the personal media and/or broadcast media to be presented in a media guide. The media guide comprising the personal media and/or broadcast media may be presented in a graphical user interface. The graphical user interface may contain aural and/or visual representations of the personal media and/or broadcast media comprising audio, text, video and/or graphics. Notwithstanding, the graphical user interface may be controlled by a keyboard, a mouse, a remote control and/or a microphone, for example.

The schedule may be adapted to correlate a particular one of the personal media and broadcast media to at least one of a time, a day and a year for presenting the personal media and/or broadcast media in the communication channel by the processor. The processor may cause access and control functions for controlling or manipulating the personal media and/or broadcast media to be displayed within the media guide. Accordingly, the personal media and/or broadcast media may be selected from-a list of sources presented in the media guide. The personal media and/or broadcast media may be rescheduled by the processor to be presented in the communication channel, utilizing, for example, the access and control functions. In this regard, the processor may update a time, a day and/or a year within the media guide when the personal media and/or broadcast media is to be presented in the communication channel. The processor may also cause a source of the personal and/or broadcast media to be displayed within the media guide.
According to an aspect of the invention, a method for customizing a channel interface comprises:
determining at least one of personal media and broadcast media that is to be presented in a communication channel;
determining a schedule for presenting said at least one of personal media and broadcast media in said communication channel; and
presenting said schedule comprising said at least one of personal media and broadcast media in a media guide.
Advantageously, the method further comprises presenting said media guide comprising representations of said at least one of personal media and broadcast media in a graphical user interface.
Advantageously, said graphical user interface contains at least one of aural and visual representations comprising at least one of audio, text, video and graphics of said at least one of personal media and broadcast media.
Advantageously, the method further comprises controlling said graphical user interface by at least one of a keyboard, a mouse, a remote control and a microphone.
Advantageously, said schedule correlates a particular one of said at least one of personal media and broadcast media to at least one of a time, a day and a year for said presenting of said at least one of personal media and broadcast media in said communication channel.
Advantageously, the method further comprises selecting said at least one of personal media and broadcast media from a list of sources.
Advantageously, the method further comprises displaying access and control functions for controlling said at least one of personal media and broadcast media from within said media guide.
Advantageously, the method further comprises rescheduling when said at least one of personal media and broadcast media is to be presented in said communication channel.
Advantageously, the method further comprises updating at least one of a time, a day and a year within said media guide, when said at least one of personal media and broadcast media is to be presented in said communication channel.
Advantageously, the method further comprises displaying a source of said at least one of personal media and broadcast media within said media guide.
According to another aspect of the invention, a machine-readable storage is provided having stored thereon, a computer program having at least one code section for customizing a channel interface, the at least one code section being executable by a machine for causing the machine to perform steps comprising:
determining at least one of personal media and broadcast media that is to be presented in a communication channel;
determining a schedule for presenting said at least one of personal media and broadcast media in said communication channel; and
presenting said schedule comprising said at least one of personal media and broadcast media in a media guide.
Advantageously, the machine-readable storage further comprises code for presenting said media guide comprising representations of said at least one of personal media and broadcast media in a graphical user interface.
Advantageously, said graphical user interface contains at least one of aural and visual representations comprising at least one of audio, text, video and graphics of said at least one of personal media and broadcast media.
Advantageously, the machine-readable storage further comprises code for controlling said graphical user interface by at least one of a keyboard, a mouse, a remote control and a microphone.
Advantageously, said schedule correlates a particular one of said at least one of personal media and broadcast media to at least one of a time, a day and a year for said presenting of said at least one of personal media and broadcast media in said communication channel.
Advantageously, the machine-readable storage further comprises code for selecting said at least one of personal media and broadcast media from a list of sources.
Advantageously, the machine-readable storage further comprises code that causes display of access and control functions for controlling said at least one of personal media and broadcast media from within said media guide.
Advantageously, the machine-readable storage further comprises code for rescheduling when said at least one of personal media and broadcast media is to be presented in said communication channel.
Advantageously, the machine-readable storage further comprises code for updating at least one of a time, a day and a year within said media guide, when said at least one of personal media and broadcast media is to be presented in said communication channel.
Advantageously, the machine-readable storage further comprises code that causes a source for said at least one of personal media and broadcast media to be displayed within said media guide.
According to another aspect of the invention, a system for customizing a channel interface comprises:
at least one processor receiving at least one indication of at least one of personal media and broadcast media that is to be presented in a communication channel;
said at least one processor receiving at least one indication of a schedule for presenting said at least one of personal media and broadcast media in said communication channel; and
said at least one processor causing said schedule comprising said at least one of personal media and broadcast media to be presented in a media guide.
Advantageously, said at least one processor presents said media guide comprising representations of said at least one of personal media and broadcast media in a graphical user interface.
Advantageously, said graphical user interface contains at least one of aural and visual representations comprising at least one of audio, text, video and graphics of said at least one of personal media and broadcast media.
Advantageously, said at least one processor controls said graphical user interface by at least one of a keyboard, a mouse, a remote control and a microphone.
Advantageously, said schedule correlates a particular one of said at least one of personal media and broadcast media to at least one of a time, a day and a year for said presenting of said at least one of personal media and broadcast media in said communication channel.
Advantageously, said at least one processor selects said at least one of personal media and broadcast media from a list of sources.
Advantageously, said at least one processor displays access and control functions for controlling said at least one of personal media and broadcast media from within said media guide.
Advantageously, said at least one processor reschedules when said at least one of personal media and broadcast media is to be presented in said communication channel.
Advantageously, said at least one processor updates at least one of a time, a day and a year within said media guide, when said at least one of personal media and broadcast media is to be presented in said communication channel.
Advantageously, said at least one processor causes a source of said at least one of personal media and broadcast media to be displayed within said media guide.
Advantageously, said at least one processor is at least one of a media processing system processor, a media management system processor, a computer processor, a media exchange software processor and a media peripheral processor.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

Fig. 1A is a block diagram of a communication network 20 for exchanging media or a media exchange network 20 that may be utilized in connection with a media a media guide interface in accordance with an embodiment of the invention.

Fig. 1 B is a diagram illustrating an embodiment of an exemplary media channel guide 100 that supports commercial broadcast and non-commercial broadcast or personal media channels in a communication network for exchanging media or a media exchange network, in accordance with various aspects of the present invention.

Fig. 2A is a diagram illustrating several sources of media program content available to the media guide interface of Fig. 1 in a media processing system of the media exchange network of Fig. 1, in accordance with an embodiment of the present invention.

Fig. 2B is a diagram of an exemplary embodiment of the media exchange network of Fig. 1 illustrating the sharing of media via the media guide interface of Fig. 1, in accordance with various aspects of the present invention.

Fig. 3 is a schematic block diagram of a first exemplary media exchange network in accordance with an embodiment of the present invention.

Fig. 4 is a schematic block diagram of performing personal media exchange over a second exemplary media exchange network in accordance with an embodiment of the present invention.

Fig. 5 is a schematic block diagram of performing third-party media exchange over a third exemplary media exchange network in accordance with an embodiment of the present invention.

Fig. 6 is an exemplary illustration of a TV guide channel user interface in accordance with an embodiment of the present invention.

Fig. 7 is an exemplary illustration of several instantiations of a TV guide channel user interface of Fig. 4 in accordance with an embodiment of the present invention.

Fig. 8 is an exemplary illustration of a TV guide channel user interface showing several options of a pushed media in accordance with an embodiment of the present invention.

Fig. 9A is a schematic block diagram of a media processing system (MPS) interfacing to media capture peripherals in accordance with an embodiment of the present invention.

Fig. 9B illustrates an alternative embodiment of a media processing system (MPS) in accordance with various aspects of the present invention.

Fig. 10 is a schematic block diagram of a PC and an MPS interfacing to a server on a media exchange network in accordance with an embodiment of the present invention.

Fig. 11 is a schematic block diagram of a PC interfacing to personal media capture devices and remote media storage on a media exchange network in accordance with an embodiment of the present invention.

### DETAILED DESCRIPTION OF THE INVENTION

Certain embodiments of the present invention relate to providing a user interface. In particular, certain embodiments of the present invention relate to providing a media guide interface comprising both commercial broadcast programs and non-commercial broadcast personal media content programs, in a media exchange network. Embodiments of the invention may also be found in a method and system for customizing a channel interface. Aspects of the method for customizing a channel interface may comprise the step of determining at least one of personal media and broadcast media that is to be presented in a communication channel. A schedule for presenting the personal media and/or broadcast media in the communication channel may be determined and the schedule comprising the personal media and/or broadcast media presented in a media guide. The media guide comprising representations of the personal media and/or broadcast media may be presented in a graphical user interface, which may comprise aural and/or visual representations of the personal media and/or broadcast media comprising audio, text, video and/or graphics. The graphical user interface may be controlled by, for example, a keyboard, a mouse, a remote control and/or a microphone.

In accordance with an embodiment of the invention, the schedule may be adapted to correlate a particular one of the personal media and broadcast media to at least one of a time, a day and a year for presenting the personal media and/or broadcast media in the communication channel. Access and control functions for controlling or manipulating the personal media and/or broadcast media may be displayed from within the media guide. Accordingly, the personal media and/or broadcast media may be selected from a list of sources presented in the media guide. The personal media and/or broadcast media may be rescheduled to be presented in the communication channel, utilizing, for example, the access and control functions. In this regard, a time, a day and/or a year when the personal media and/or broadcast media is to be presented in the communication channel may be updated within the media guide. A source of the personal and/or broadcast media may also be displayed within the media guide.

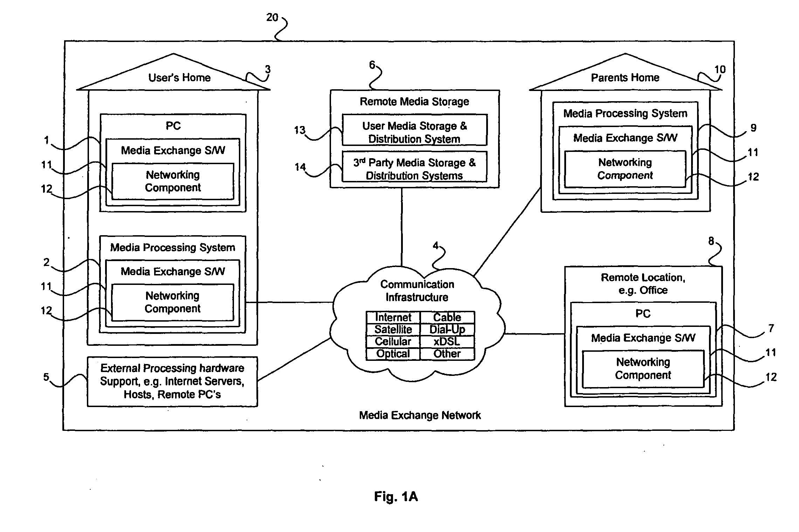

Fig. 1A is a block diagram of a communication network 20 for exchanging media or a media exchange network 20 that may be utilized in connection with a media a media guide interface in accordance with an embodiment of the invention. Referring to Fig. 1A, the media exchange network (MEN) of Fig. 1A may comprise a first PC 1 and a first media processing system (MPS) 2, which may be situated at a first location such as a user's home 303. The media exchange network 20 may also include a communication infrastructure 4, external processing hardware support 5 and remote media storage 6. A second PC 7 may be situated at a second location, which may be a remote location 8 such as an office. A third location such as a Parent's home 10 may include a media processing system 9. The media exchange network 20 may be a secure, closed network environment that may only be accessible to pre-defined users or subscribers and/or service providers. Notwithstanding, the invention may not be limited in this regard, and at least a portion of the network and/or services provided by the network may be publicly accessible.

The PC's in the media exchange network 20 may each include media exchange software and a networking component. In this regard, the PC 1 may include media exchange software 11 and networking component 12. The PC 7 may also include media exchange software 11 and networking component 12. The media processing systems in the media exchange network 20 may each include media exchange software and a networking component. In this regard, the media processing system 2 may include media exchange software 11 and networking component 12. Similarly, the media processing system 9 may include media exchange software 11 and networking component 12. The networking components 12 of PCs 1 and 7 and media processing systems 2 and 9 may be configured to provide networking connectivity to the communication infrastructure 4.

The media exchange software platform 11 may provide functions and capabilities, which may include, but are not limited to media "push" capability, media "access" capability, media channel construction/selection, image sequence selection, text and voice overlay, channel and program naming and inter-home routing selection. The media exchange platform 11 may also provide authorship and media rights management, shared inter-home or inter-location media experience, billing services, and integrated television channel guide look-and-feel functionalities.

The external processing hardware support 5 may include at least one server such as a centralized internet server, a media exchange server, a peer-to-peer server, or a cable headend. Notwithstanding, functions provided by the server may alternatively be distributed over various hosts or remote PC's. The media exchange software platform 11 may also reside on the external processing hardware support server 5. The remote media storage 6 may include user media storage and distribution systems 13 and/or third party media storage and distribution systems 14.

A media processing system may also comprise a set-top-box (STB), a PC, and/or a television with a media management system (MMS). A media management system may also be referred to as a media exchange software (MES) platform. Notwithstanding, a media management system may include a software platform operating on at least one processor that may provide certain functionality including user interface functionality, distributed storage functionality, networking functionality, and automatic control and monitoring of media peripheral devices. For example, a media management system may provide automatic control of media peripheral devices, automatic status monitoring of media peripheral devices, and inter-home media processing system routing selection. A media processing system may also be referred to as- a media-box and/or an M-box. Any personal computer may indirectly access and/or control any media peripheral device in instances where the personal computer may include a media management system. Such access and/or control may be accomplished through various communication pathways via the media processing system or outside of the media processing system. A media processing system may also have the capability to automatically access and control any media peripheral device without user interaction and/or with user intervention. A personal computer (PC) may include media exchange software running on or being executed by the personal computer and may be referred to as a media processing system. The media processing system may also include a speech recognition engine that may be adapted to receive input speech and utilize the input speech control various functions of the media processing system.

Each of the elements or components of the network for communicating media or media exchange network may be identified by a network protocol address or other identifier which may include, but is not limited to, an internet protocol (IP) address, a media access control (MAC) address and an electronic serial number (ESN). Examples of elements or components that may be identified by such addresses or identifiers may include media processing systems, media management systems, personal computers, media or content providers, media exchange software platforms and media peripherals.

The communication infrastructure 4 may include at least one of Internet infrastructure, satellite infrastructure, cable infrastructure, dial-up infrastructure, cellular infrastructure, xDSL infrastructure, optical infrastructure, or some other access and/or transport infrastructure. The communication infrastructure 4 may provide a common access and/or transport communication path for the first location or user's home 3, the second location or remote office location 8, the third location or parent's home 10 and the remote media storage 6. In this regard, the communication infrastructure 4 may provide access and/or transport communication path that may link users and service providers of the media exchange network 20.

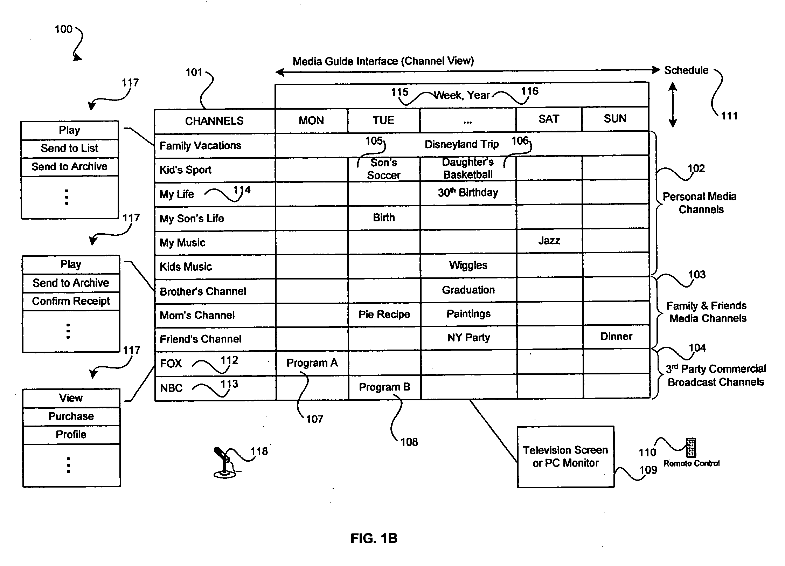

Fig. 1 B is a diagram illustrating an embodiment of an exemplary media channel guide 100 that supports commercial broadcast and non-commercial broadcast or personal media channels in a communication network for exchanging media or a media exchange network, in accordance with various aspects of the present invention. A media exchange network is a communication network that allows for the exchange of, for example, personal media channels between users of the network, in accordance with various embodiments of the present invention.

The media guide interface 100 may be a television channel guide user interface that may be displayed on a television screen or PC monitor 109 to a user in order to support the selection and viewing of media channels using a remote control, keyboard, and/or mouse 110. The microphone 118 may also be utilized to control the media guide interface 100. Notwithstanding, the media guide interface 100 may comprise a table of media channels 101 and various media program content tied to a schedule 111. Each media channel corresponds to a schedule 111 showing, for example, a week 115 and a year 116. For example, under the "kid's sports channel" 114, the "son's soccer game" 105 may be scheduled to be viewed on Tuesday of the current week 115 and current year 116. The media guide interface 100 may be viewed with a schedule having other formats of, for example, "month, year", "week#, year", "day, week#", or "hour, day", for example.

In accordance with an embodiment of the invention, for any media channel, a sub-menu 117 may be provided that may be utilized to facilitate selection of certain control and access functions such as "play", "send to list", "send to archive", "confirm receipt", "view", "purchase", and "profile", for example. Notwithstanding, the invention is not so limited and many other functions and sub-menus may also be available in accordance with various embodiments of the invention.

The various media program content of the media guide interface 100 may comprise personal media channels 102, friends' and family's media channels 103, and 3^{rd} party commercial broadcast channels 104. For example, a personal media channel 102 may comprise a "Kid's Sports" channel 114 that may have previously been created by a user and may comprise "Son's Soccer Game" 105 and "Daughter's Basketball Game" 106. "Son's Soccer Game" 105 is scheduled to be viewed on Tuesday of the current week 115 and a "Daughter's Basketball Game" 106, scheduled to be viewed on Wednesday of the current week 115. Also, a first third (3^{rd}) party commercial broadcast channel, "FOX" 112, may comprise a "Program A" 107 that is to be broadcast by a first third (3^{rd}) party commercial broadcaster on Monday of the current week 115. Similarly, a second third (3^{rd}) party commercial broadcast channel, "NBC" 113, may comprise a "Program B" 108 that is to be broadcast by a second third (3^{rd}) party commercial broadcaster on Tuesday of the current week 115.

Fig. 2A is a diagram illustrating several sources of media program content available to the media guide interface 100 of Fig. 1 in a media processing system (MPS) 210 of the media exchange network of Fig. 1, in accordance with various aspects of the present invention. The media processing system 210 may be part of a media exchange network that may be utilized to exchange media content between different users on the media exchange network.

The media processing system 210 may comprise a media exchange software (MES) platform 211. The media exchange software platform 211 may provide a media guide interface 212, a device view 213, and a media view 214. The media exchange software platform may also provide the functionality to store a mixture of commercial broadcast programs and personal media programs into channels of the media guide interface.

The device view 213 may comprise a table of devices on the media exchange network versus media content categories. For example, the device view 213 may comprise a third (3^{rd}) party server, the device, storing digital movies, the media content category. The media view 214 may comprise a table of media content categories on the media exchange network versus specific media content. For example, a media view may comprise a "Music" media content category, the media content category, storing songs from several CD's as MP3 files, the specific media content. A channel view of a media processing system may comprise a table of media channels along with corresponding scheduled media content, in accordance with an embodiment of the present invention. A media view of a media processing system may comprise a table of media content categories versus media content, in accordance with an embodiment of the present invention. Both the channel view and the media view may be viewed by a user on a television screen of a media processing system. United States Application Serial No. ____ (Attorney Docket No. 14276US02) filed September 30, 2003 discloses a method and system for media processing providing access to a channel guide, aspects of which illustrate exemplary media and device views, the contents of which are incorporated herein by reference in its entirety.

In accordance with an embodiment of the present invention, representations of the media content may be moved from the device view 213 and/or the media view 214 into various slots of the media guide interface 212 which may represent the channels. The moved media content may comprise both third (3^{rd}) party commercial broadcast program content and personal media content, or just one or the other, in accordance with various embodiments of the present invention.

A personal computer may be utilized, instead of a media processing system, to interface to the media exchange network for the purpose of providing a media guide interface. Also, a set-top-box may be used with the communication network for exchanging media to provide a media guide interface that may be displayed on a television screen and manipulated with a remote control or other pointing or navigation device.

Current set-top-boxes may be software enhanced to create a media processing system that provides full media exchange network interfacing and functionality via a television screen with a media guide interface having a television channel guide look-and-feel. Personal computers may be software enhanced as well and provide the same media guide interface with a television channel guide look-and-feel. Therefore, the media exchange network supports both personal computers and MPS's in a similar manner. Alternatively, a fully integrated media processing system may be designed from the ground up, having full media processing system capability, without upgrading an existing system. Additionally, current set-top-boxes may also be hardware enhanced to create a media processing system that provides full media exchange network interfacing and functionality via a television screen with a media guide interface having a television channel guide look-and-feel. Personal computers may also be hardware enhanced as well and provide the same media guide interface with a television channel guide look-and-feel. Hardware enhancement may include, for example, adding plug-in cards to the set-top-boxes and/or personal computers.

In the case of an media processing system or enhanced set-top-box configuration, a user may utilize, for example, a remote control to control the media guide interface that may be displayed on a television screen. In the case of a personal computer configuration, a user may utilize, for example, a keyboard, mouse or other computer peripheral to control the media guide interface that may be display on a computer monitor.

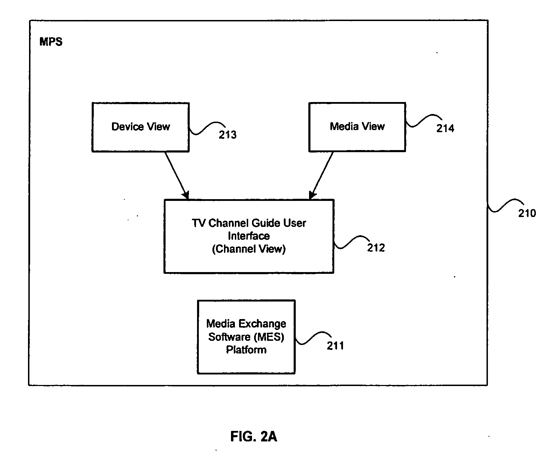

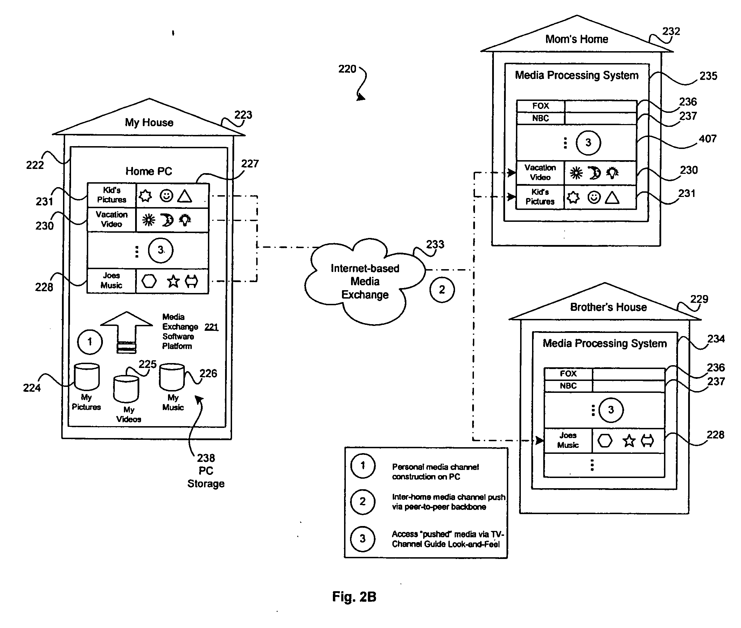

Fig. 2B illustrates an example of sharing media over a media exchange network 220 via a media guide interface 227 in accordance with an embodiment of the present invention. The media exchange network 220 comprises a home PC 222 at "my house" 223, a media processing system 234 at "brother's house" 229, a media processing system 235 at "Mom's house" 232, and an Internet-based media exchange network infrastructure 233 connecting together the home personal computer 222, the media processing system 234, and the media processing system 235. The home PC 222 may comprise a media exchange software (MES) platform 221 to provide a media guide interface 227 and to allow sharing of media channels with other authorized users of the media exchange network 220. The home PC 222 also provides personal computer storage 238 to store personal digital media. In accordance with an embodiment of the present invention, the media exchange network 220 may comprise a plurality of users and media providers, and is not limited to the user at "my house" 223; Mom and brother as illustrated in Fig. 2B.

The media exchange software (MES) platform 221 may be utilized to construct personal media channels in the media user guide 227 on the personal computer 222 by a user at "my house" 223, along with having commercial broadcast channels in the media guide interface 227. For example, with various media stored on the personal computer 222 such as digital pictures 224, videos 225, and music 226, the media exchange software platform 221 allows the digital media to be organized by a user into several channels on the media guide interface 227 having a television channel guide look-and-feel on the personal computer 222.

"Brother's house" 229 includes the media processing system 234 connected to the media exchange network 220. "Mom's house" 232 includes the media processing system 235 connected to the media exchange network 220. The media processing systems 234 and 235 also use a similar media exchange software platform 221 and provide the common media guide interface 227.

The user at "my house" 223 may push a media channel 228, for example, "Joe's Music", to "brother's house" 229 and push two media channels 230 and 231, for example, "Vacation Video" 230 and "Kid's Pictures" 231, to "Mom's house" 232 via the Internet-based media exchange network infrastructure 233 on the internet-based media exchange network 220.

Brother and/or Mom may access the pushed media channels via their respective media processing systems (MPS's) 234 and 235 using their respective media processing system television screens and remote controls. Note that in the case of "Mom's house" 232 and "brother's house" 229, the media guide interface comprises at least two broadcast channels "FOX" 236 and "NBC" 237. Similarly, Brother and/or Mom may push media channels from their respective media processing systems 234 and 235 to other user's of the media exchange network 220, in accordance with an embodiment of the present invention.

A major challenge is to be able to transfer and share many different types of digital media, data, and services between one device/location and another with ease while being able to index, manage, and store the digital media and data.

For example, it is desirable to be able to distribute and store many types of digital media in a PC and/or television environment in a user-friendly manner without requiring many different types of software applications and/or unique and dedicated interfaces. Any networking issues or other technical issues should be transparent to the users. It is also desirable to take advantage of existing hardware infrastructure, as much as possible, when providing such capability.

In an embodiment of the present invention, a media exchange network is provided that enables many types of digital media, data, and/or services to be stored, indexed, viewed, searched for, pushed from one user to another, and requested by users, using a media guide user interface. The media exchange network also allows a user to construct personal media channels that comprise his personal digital media (e.g., captured digital pictures, digital video, digital audio, etc.), request that third-party media channels be constructed from third-party digital media, and access the media channels pushed to him by other users on the media exchange network.

PC's may be used but are not required to interface to the media exchange network for the purpose of exchanging digital media, data, and services. Instead, set-top-boxes or integrated MPS's (media processing systems) may be used with the media exchange network to perform all of the previously described media exchange functions using a remote control with a television screen.

Current set-top-boxes may be software enhanced to create a MPS that provides full media exchange network interfacing and functionality via a TV screen with a TV guide look-and-feel. PC's may be software enhanced as well and provide the same TV guide look-and-feel. Therefore, the media exchange network supports both PC's and MPS's in a similar manner. Alternatively, a fully integrated MPS may be designed from the ground up, having full MPS capability.

In the case of an MPS configuration, the user takes advantage of his remote control and TV screen to use the media exchange network. In the case of a PC configuration, the user takes advantage of his keyboard and/or mouse to use the media exchange network.

An MPS or enhanced PC is effectively a storage and distribution platform for the exchange of personal and third party digital media, data, and services as well as for bringing the conventional television channels to a user's home. An MPS and/or PC connects to the media exchange network via an existing communication infrastructure which may include cable, DSL, satellite, etc. The connection to the communication infrastructure may be hard-wired or wireless.

The media exchange network allows users to effectively become their own broadcasters from their own homes by creating their own media channels and pushing those media channels to other authorized users on the media exchange network, such as friends and family members.

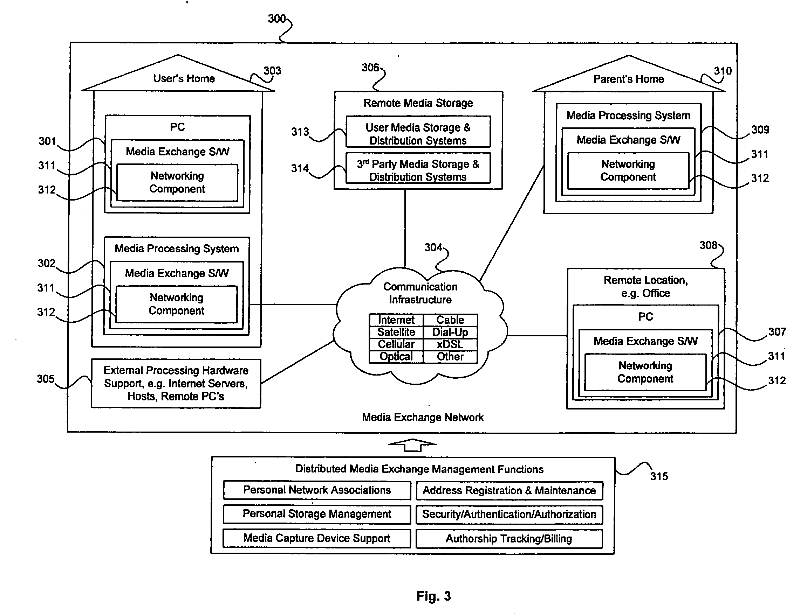

Fig. 3 comprises a media exchange network 300 for exchanging and sharing digital media, data, and services in accordance with an embodiment of the present invention. The media exchange network 300 is a secure, closed network environment that is only accessible to pre-defined users and service providers. The media exchange network of Fig. 3 comprises a first PC 301 and a first media processing system (MPS) 302 at a user's home 303, a communication infrastructure 304, external processing hardware support 305, remote media storage 306, a second PC 307 at a remote location 308 such as an office, and a second MPS 309 at a parent's home 310.

The PC's 301 and 307 and the MPS's 302 and 309 each include a media exchange software (MES) platform 311 and a networking component 312 for connectivity. The MES platform 311 provides multiple capabilities including media "push" capability, media "access" capability, media channel construction/selection, image sequence selection, text and voice overlay, channel and program naming, inter-home routing selection, authorship and media rights management, shared inter-home media experience, billing service, and an integrated media guide interface providing a TV channel guide look-and-feel.

The external processing hardware support 305 comprises at least one server such as a centralized internet server, a peer-to-peer server, or cable head end. The server may alternatively be distributed over various hosts or remote PC's. The MES platform 311 may also reside on the external processing hardware support server 305. The remote media storage 306 may comprise user media storage and distribution systems 313 and/or third party media storage and distribution systems 314.

The communication infrastructure 304 may comprise at least one of internet infrastructure, satellite infrastructure, cable infrastructure, dial-up infrastructure, cellular infrastructure, xDSL infrastructure, optical infrastructure, or some other infrastructure. The communication infrastructure 304 links the user's home 303, parent's home 310, remote media storage 306, and remote location office 308 to each other (i.e., the communication infrastructure 304 links all users and service providers of the media exchange network 300).

The various functions 315 of the media exchange network 300 comprise generating personal network associations, personal storage management, media capture device support, security/authentication/authorization support, authorship tracking and billing and address registration and maintenance. These media exchange management functions 315 may be distributed over various parts of the media exchange network 300. For example, the personal network associations and personal storage management functions may be integrated in the PC 301 at the user's home 303.

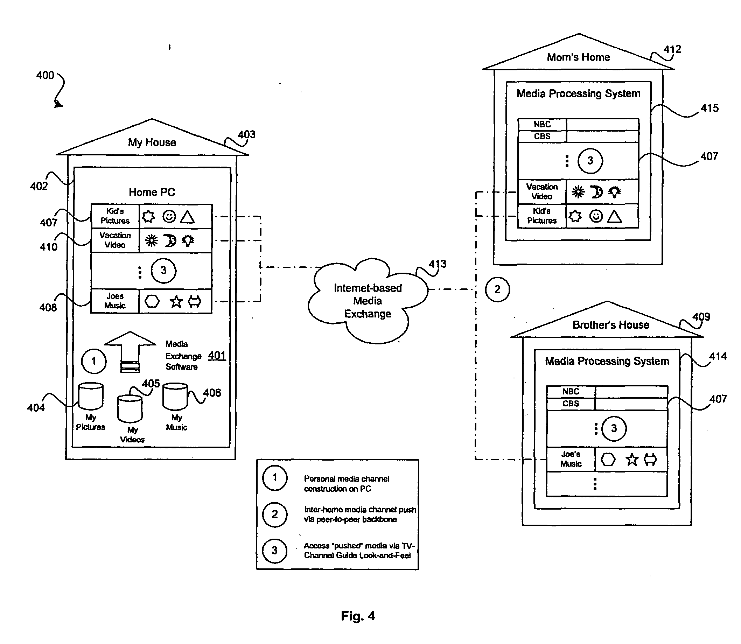

Fig. 4 illustrates an example of personal media exchange over a media exchange network 400 in accordance with an embodiment of the present invention. In step 1, the media exchange software (MES) platform 401 is used to construct personal media channels on a PC 402 by a user at "my house" 403. For example, with various media stored on the PC 402 such as digital pictures 404, videos 405, and music 406, the MES platform 401 allows the digital media to be organized by a user into several channels having a media guide user interface 407 on the PC 402.

In step 2, the user at "my house" 403 pushes a media channel 408 (e.g., "Joe's Music") to "brother's house" 409 and pushes two media channels 410 and 411 (e.g., "Vacation Video" and "Kid's Pictures") to "Mom's house" 412 via a peer-to-peer server 413 over the internet-based media exchange network 400. "Brother's house" 409 includes a first MPS 414 connected to the media exchange network 400. "Mom's house" 412 includes a second MPS 415 connected to the media exchange network 400. The MPS's 414 and 415 also provide a media guide user interface 407.

In step 3, brother and/or Mom access the pushed media channels via their respective media processing systems (MPS's) 414 and 415 using their respective MPS TV screens and remote controls.

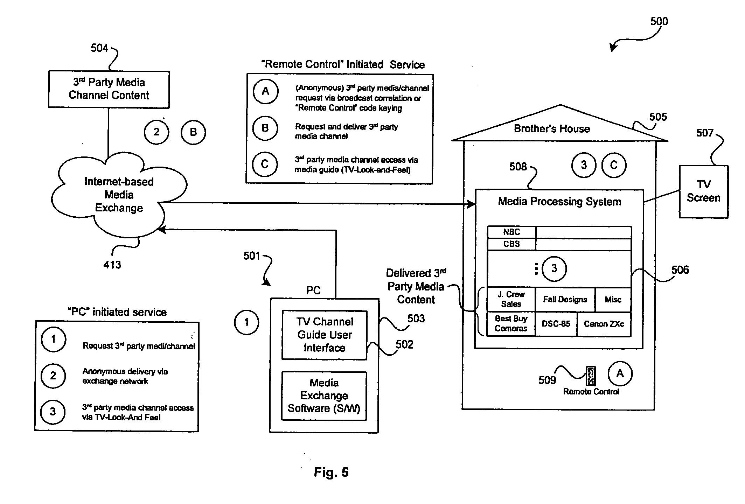

Fig. 5 illustrates an example of third-party media exchange over a media exchange network 500 in accordance with an embodiment of the present invention. In step 1, a PC-initiated third-party request is made by a first party 501 via an intemet-based media exchange network 500 using a media guide user interface 502 on a PC 503. In step 2, an anonymous delivery of the requested third-party channel 504 is made to a second party 505 via the internet-based media exchange network 500. In step 3, the second party 505 accesses the third-party channel 504 using a media guide user interface 506 on a TV screen 507 that is integrated into an MPS 508.

Similarly, in step A, an MPS-initiated third-party request is made by a second party 505 via an internet-based media exchange network 500 using a media guide user interface 506 on a TV screen 507 using a remote control 509. The second party 505 may key in a code, using his remote control 509, that is correlated to a commercial or some other third party broadcast media. In step B, an anonymous delivery of the requested third-party channel 504 is made to a first party 501 via the intemet-based media exchange network 500. In step C, the first party 501 accesses the third-party channel 504 using a media guide user interface 502 on a PC 503.

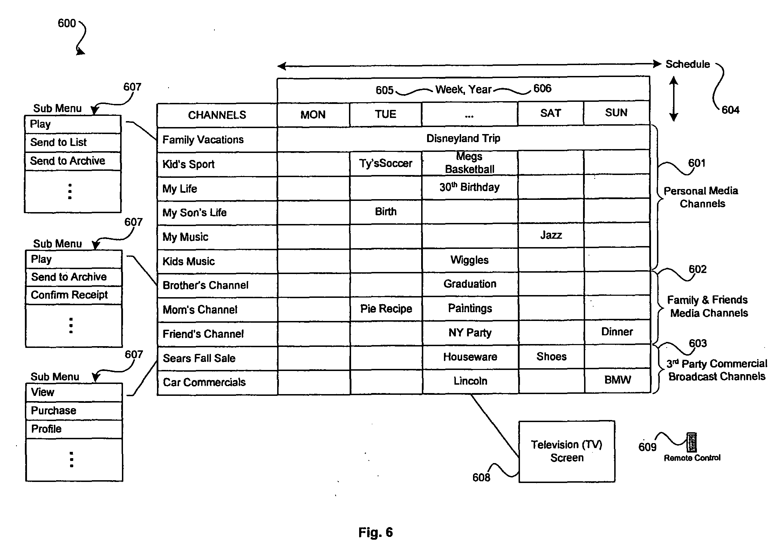

Fig. 6 illustrates a media guide user interface 600 in accordance with an embodiment of the present invention. The media guide user interface 600 may be displayed on a TV screen 608 and controlled by a remote control device 609. Also, the media guide user interface 600 may be displayed on a PC monitor and controlled by a keyboard or mouse.

The media guide user interface 600 may be configured not only for conventional TV channels but also for personal media channels 601 that are constructed by a user of a media exchange network, friend's and family's media channels 602 constructed by friends and family, and third party channels 603 that are constructed by third parties either upon request by a user of a media exchange network or based on a profile of a user.

The personal media channels 601 may include, for example, a "family vacations channel", a "kid's sports channel", a "my life channel", a "son's life channel", a "my music channel", and a "kid's music channel". The friends and family media channels 602 may include, for example, a "brother's channel", a "Mom's channel", and a "friend's channel". The third party media channels 603 may include, for example, a "Sears Fall sale channel" and a "car commercials channel".

Each media channel may correspond to a schedule 604 showing, for example, a week 605 and a year 606. For example, under the "kid's sports channel", Ty's soccer game could be scheduled to be viewed on Tuesday of the current week 605 and current year 606. For each media channel, a sub-menu 607 allows for selection of certain control and access functions such as "play", "send to list", "send to archive", "confirm receipt", "view", "purchase", and "profile".

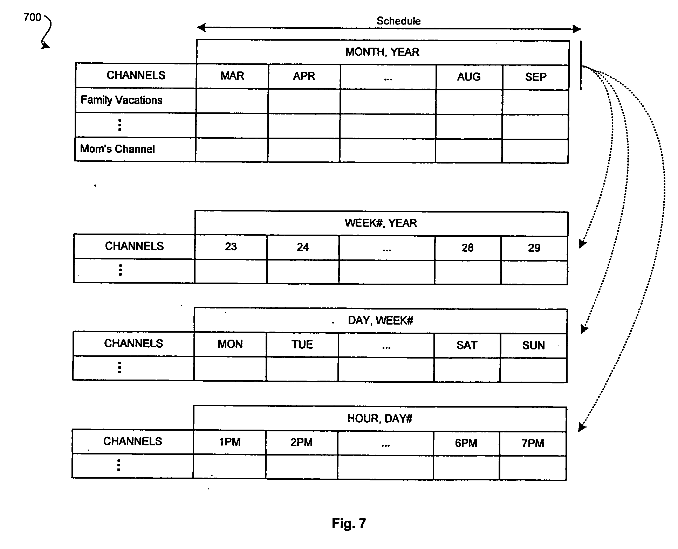

Fig. 7 illustrates possible multiple instantiations of a media guide user interface 700 in accordance with an embodiment of the present invention. The media guide user interface 700 may be viewed with a schedule having formats of, for example, "month, year", "week#, year", "day, week#", or "hour, day".

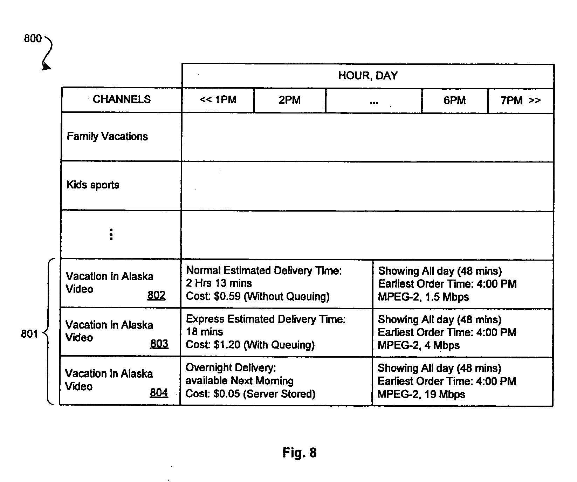

Referring to Fig. 8, a user of a media exchange network may push a media channel (e.g., "Vacation in Alaska Video") to a friend who is on the same media exchange network. The media guide user interface 800 may give the friend several options 801 for how to accept and download the pushed media in accordance with an embodiment of the present invention.

For example, a first, most expensive option 803 may be "Express Delivery" which would deliver the pushed media to the friend in 18 minutes using queuing and cost $1.20, for example. The pushed media may be stored in a file in an MPEG 2 format that was recorded at a rate of 4 Mbps, for example. Queuing comprises buffering and delivering a previous part of the media and then buffering and delivering a next part of the media. For example, a first six minutes of the "Vacation in Alaska Video" may be buffered and delivered first, then a second six minutes may be buffered and delivered next, and so on until the entire media is delivered.

A second, less expensive option 802 may be "Normal Delivery" which would deliver the pushed media in 2 hours and 13 minutes without queuing and cost $0.59, for example. The pushed media may be stored in a file in an MPEG 2 format that was recorded at a rate of 1.5 Mbps, for example.

A third, least expensive option 804 may be "Overnight Delivery" which would deliver the pushed media by the next morning and cost only $0.05, for example. The pushed media may be stored in a file in an MPEG 2 format that was recorded at a rate of 19 Mbps and stored on a server, for example.

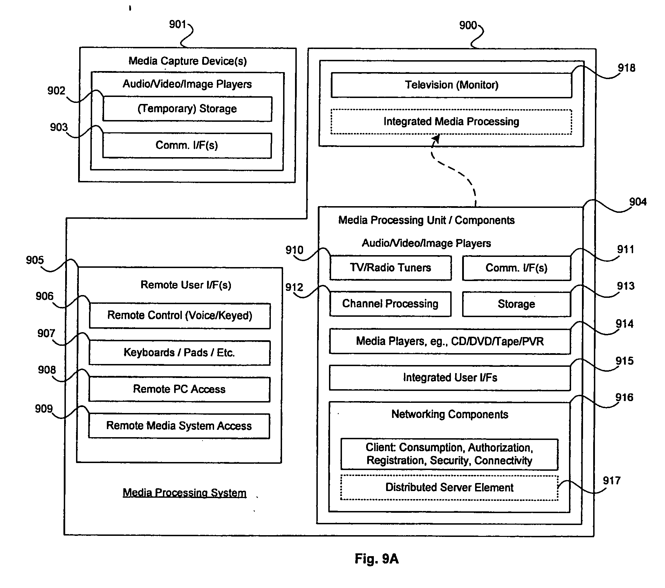

Fig. 9A illustrates the detailed elements of a media processing system (MPS) 900 and media capture devices 901 in accordance with an embodiment of the present invention. The media capture devices 901 may comprise audio, video, and image players, such as digital cameras, digital camcorders, and MP3 players, that each include a temporary storage area 902 and a communication interface 903 such as, for example, a USB interface or a wireless interface. The media capture devices 901 have the capability to interface to an MPS and a PC.

The MPS 900 comprises a media processing unit (MPU) 904, remote user interface(s) 905, and a TV screen 918 to provide integrated media processing capability and indirect user interface capability. The remote user interfaces 905 may comprise a voice or keyed remote control 906, keyboards and pads 907, a remote PC access interface 908, and a remote media system access interface 909 (i.e., providing access from another MPS).

The media processing unit (MPU) 904 comprises TV and radio tuners 910 for image and audio consumption, communications interfaces 911, channel processing 912 (creating, storing, indexing, viewing), storage 913, media players 914 (CD, DVD, Tape, PVR, MP3), an integrated user interface 915 (to provide a TV channel guide look-and-feel), networking components 916 to provide client functions such as consumption (billing), authorization (e.g., using digital certificates and digital ID's), registration, security, and connectivity. In an alternative embodiment of the present invention, the networking components 916 may include a distributed server element 917 that is part of a distributed server.

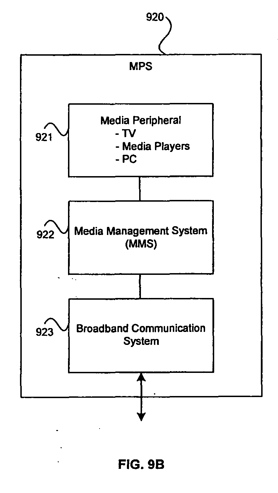

Fig. 9B illustrates an alternative embodiment of a media processing system (MPS) 920 in accordance with various aspects of the present invention. The MPS 920 is essentially an enhanced set-top-box for viewing and interacting with various user interfaces, media, data, and services that are available on the media exchange network using, for example, a remote control. The MPS 920 comprises a media peripheral 921, a MMS (media management system) 922, and a broadband communication interface 923.

The media peripheral 921 may include a TV (television), a PC (personal computer), and media players (e.g., a CD player, a DVD player, a tape player, and a MP3 player) for video, image, and audio consumption of broadcast and/or personal channels. The broadband communication interface 923 may include internal modems (e.g., a cable modem or DSL modem) or other interface devices in order to communicate with, for example, a cable or satellite headend.

The MMS 922 includes a software platform to provide functionality including media "push" capability, media "access" capability, media channel construction/selection, image sequence selection, text and voice overlay, channel and program naming, inter-home routing selection, authorship and media rights management, shared inter-home media experience, billing service, and a media guide user interface providing an integrated TV channel guide look-and-feel.

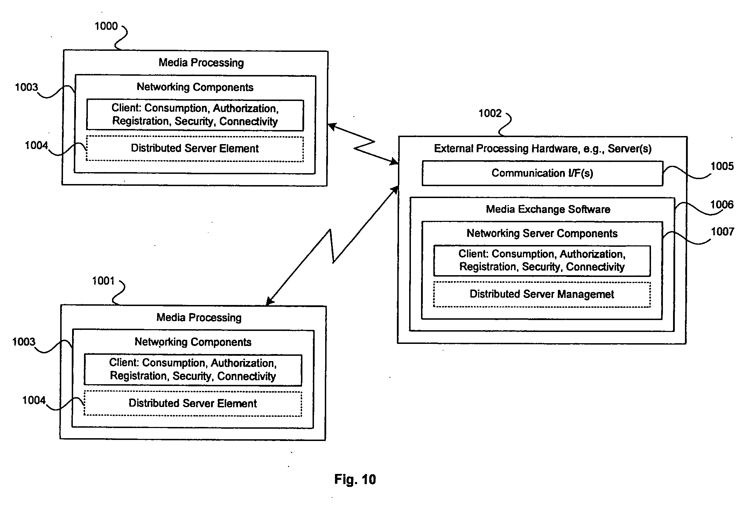

Fig. 10 illustrates connectivity between a PC 1000, an MPS 1001, and external processing hardware 1002 (e.g., a server) in accordance with an embodiment of the present invention. The PC 1000 and MPS 1001 include networking components 1003 to provide client functions such as consumption (billing), authorization, registration, security, and connectivity. Alternatively, the PC 1000 and MPS 1001 may include a distributed server element 1004 that is part of a distributed server.

The PC 1000 and MPS 1001 connect to the external processing hardware 1002 via wired or wireless connections. The external processing hardware 1002 comprises a distributed server or peer-to-peer server. The external processing hardware 1002 also comprises communication interfaces 1005 (e.g., cable interfaces, optical interfaces, etc.) and a media exchange software (MES) platform 1006. The MES platform 1006 in the external processing hardware 1002 allows for communication with the PC 1000 and MPS 1001 which may also use the same MES platform 1006. The external processing hardware 1002 also includes networking server components 1007 to provide the similar client functions such as consumption (billing), authorization, registration, security, and connectivity at the server side.

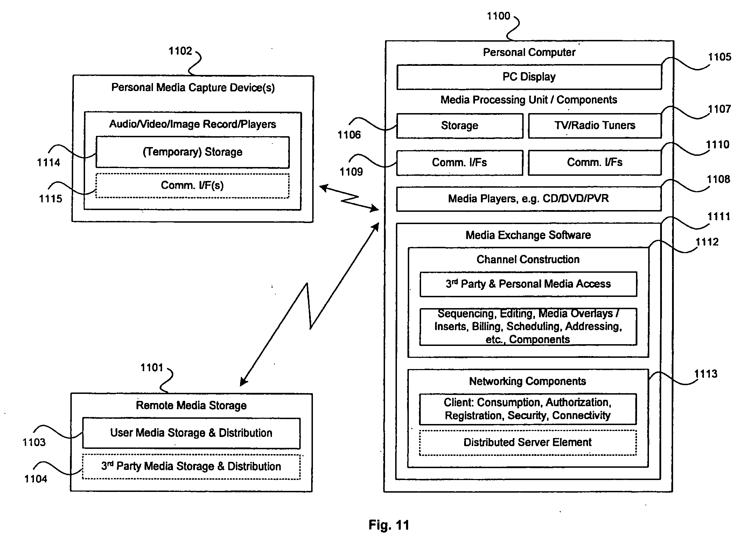

Fig. 11 illustrates connectivity between a PC 1100, remote media storage 1101, and personal media capture devices 1102 when the PC 1100 is used as the primary distributor of digital media such as in the case of PC-to-PC operation, in accordance with an embodiment of the present invention. The personal media capture devices 1102 and remote media storage 1101 connect to the PC 1100 via a wireless or wired connection. The remote media storage 1101 provides user media storage and distribution 1103 as well as third party media storage and distribution 1104. The personal media capture devices 1102 provide temporary storage 1114 and communication interfaces 1115.

Viewing is done using a PC monitor 1105 instead of a television screen. The PC 1100 may include storage 1106, TV/radio tuners 1107 for media consumption, media players 1108, and communication interfaces 1109 and user interfaces 1110 similar to those for the MPS of Fig. 9A. The PC 1100 includes a media exchange software (MES) platform 1111 that provides channel construction capability 1112 and networking capability 1113. The channel construction capability 1112 allows third party and personal media access, sequencing, editing, media overlays and inserts, billing, scheduling, and addressing.

Another embodiment of the invention may include a system for customizing a channel interface. The system may comprise at least one processor that is adapted to receive an indication of personal media and/or broadcast media that is to be presented in a communication channel. The processor may also receive an indication of a schedule for presenting the personal media and/or broadcast media in the communication channel. The processor may cause the schedule comprising representations of the personal media and/or broadcast media to be presented in a media guide. The media guide comprising the personal media and/or broadcast media may be presented in a graphical user interface that may comprise aural and/or visual representations of the personal media and/or broadcast media comprising audio, text, video and/or graphics. The graphical user interface may be controlled by a keyboard, a mouse, a remote control and/or a microphone, for example. The processor may be a media processing system processor, a media management system processor, a computer processor, a media exchange software processor and a media peripheral processor.

In an aspect of the invention, the schedule may be adapted to correlate a particular one of the personal media and broadcast media to at least one of a time, a day and a year for presenting the personal media and/or broadcast media in the communication channel by the processor. The processor may cause access and control functions for controlling or manipulating the personal media and/or broadcast media to be displayed within the media guide. Accordingly, the personal media and/or broadcast media may be selected from a list of sources presented in the media guide. The personal media and/or broadcast media may be rescheduled by the processor to be presented in the communication channel, utilizing, for example, the access and control functions. In this regard, the processor may update a time, a day and/or a year within the media guide when the personal media and/or broadcast media is to be presented in the communication channel. The processor may also cause a source of the personal and/or broadcast media to be displayed within the media guide.

Accordingly, the present invention may be realized in hardware, software, or a combination of hardware and software. The present invention may be realized in a centralized fashion in one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for customizing a channel interface, the method comprising:
determining at least one of personal media and broadcast media that is to be presented in a communication channel; and
determining a schedule for presenting said at least one of personal media and broadcast media in said communication channel.

2. The method according to claim 1, further comprising
presenting said schedule comprising said at least one of personal media and broadcast media in a media guide.

3. The method according to claim 2, further comprising presenting said media guide comprising representations of said at least one of personal media and broadcast media in a graphical user interface.

4. The method according to claim 3 wherein said graphical user interface contains at least one of aural and visual representations comprising at least one of audio, text, video and graphics of said at least one of personal media and broadcast media.

5. A machine-readable storage having stored thereon, a computer program having at least one code section for customizing a channel interface, the at least one code section being executable by a machine for causing the machine to perform steps comprising:
determining at least one of personal media and broadcast media that is to be presented in a communication channel; and
determining a schedule for presenting said at least one of personal media and broadcast media in said communication channel.

6. The machine-readable storage according to claim 5, further comprising code for presenting said schedule comprising said at least one of personal media and broadcast media in a media guide.

7. The machine-readable storage according to claim 6, further comprising code for presenting said media guide comprising representations of said at least one of personal media and broadcast media in a graphical user interface.

8. A system for customizing a channel interface, the system comprising:
at least one processor receiving at least one indication of at least one of personal media and broadcast media that is to be presented in a communication channel; and
said at least one processor receiving at least one indication of a schedule for presenting said at least one of personal media and broadcast media in said communication channel.

9. The system according to claim 8, wherein said at least one processor causes said schedule comprising said at least one of personal media and broadcast media to be presented in a media guide.

10. The system according to claim 9, wherein said at least one processor presents said media guide comprising representations of said at least one of personal media and broadcast media in a graphical user interface.
